(19) Europäisches Patentamt
European Patent Office
Office européen des brevets

(11) EP 2 447 318 A1

(12) **EUROPEAN PATENT APPLICATION**
published in accordance with Art. 153(4) EPC

(43) Date of publication:
**02.05.2012 Bulletin 2012/18**

(21) Application number: **10792145.4**

(22) Date of filing: **23.06.2010**

(51) Int Cl.:
***C08L 15/00*** *(2006.01)* ***B60C 1/00*** *(2006.01)*
***C08K 3/36*** *(2006.01)* ***C08K 5/541*** *(2006.01)*

(86) International application number:
**PCT/JP2010/060677**

(87) International publication number:
**WO 2010/150827 (29.12.2010 Gazette 2010/52)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **24.06.2009 JP 2009150067**

(71) Applicant: **Bridgestone Corporation**
**Tokyo 104-8340 (JP)**

(72) Inventors:
- **OZAWA, Yoichi**
**Kodaira-shi**
**Tokyo 187-8531 (JP)**
- **NAKAYAMA, Atsushi**
**Kodaira-shi**
**Tokyo 187-8531 (JP)**

(74) Representative: **Lamb, Martin John Carstairs**
**Marks & Clerk LLP**
**90 Long Acre**
**London**
**WC2E 9RA (GB)**

# (54) POLYMER COMPOSITION, RUBBER COMPOSITION, AND TIRE OBTAINED USING SAME

(57) The present invention relates to a polymer composition containing (A) an elastomer that has a reactive functional group on a main chain, (B) an inorganic filler, and (C) a coupling agent that has one or less on average per molecule of a modification functional group having binding reactivity with the reactive functional group on the main chain of the elastomer as the component (A), and has a functional group having affinity with the component (B) or being capable of being bonded to the component (B), a rubber composition containing the polymer composition, and a tire containing the rubber composition, and provides a polymer composition that provides a rubber composition capable of enhancing fuel consumption efficiency of a tire and imparting sufficient wear resistance and rupture resistance to a tire, a rubber composition that has the aforementioned properties, containing the polymer composition, and a tire containing the rubber composition.

EP 2 447 318 A1

## Description

### Technical Field

The present invention relates to a polymer composition, a rubber composition containing the same, and a tire containing the rubber composition. More specifically, the present invention relates to a polymer composition that, upon using as a tire material, enhances fuel consumption efficiency of a tire and imparts sufficient wear resistance and rupture resistance to a tire, a rubber composition that has the aforementioned properties, containing the polymer composition, and a tire containing the rubber composition as a tire material.

### Background Art

Recently, there is an increasing demand on enhancement of fuel consumption efficiency of automobiles, and a tire with small rolling resistance is demanded. Accordingly, a rubber composition that has low tanδ (which may be hereinafter referred to as low loss property) and is excellent in low heat buildup property is demanded as a rubber composition used in a tread or the like of a tire. A rubber composition for a tread is demanded to be excellent in wear resistance and rupture resistance, in addition to the low loss property, from the standpoint of safety and economy. For addressing the demands, in order to enhance low loss property, wear resistance and rupture resistance of a rubber composition containing a rubber component having an inorganic filler, such as silica, or carbon black mixed therein, it is effective to enhance the affinity between the inorganic filler and the rubber component in the rubber composition.

For example, in order to enhance the affinity between the inorganic filler and the rubber component in the rubber composition for enhancing the reinforcing effect by the inorganic filler, there are disclosed synthetic rubber that has enhanced affinity with an inorganic filler by end group modification (see, for example, Patent Documents 1 to 5), synthetic rubber that has enhanced affinity with an inorganic filler by modification of the main chain thereof (see, for example, Patent Documents 6 and 7), and the like.

However, a rubber composition containing the modified synthetic rubber disclosed in Patent Documents 1 to 7 is excellent in low heat buildup property, wear resistance and rupture resistance as compared to a rubber composition containing ordinary synthetic rubber, but is still not satisfactory, and thus there is room for further improvement.

Patent Document 8 discloses a method, in which a partially hydrogenated diene liquid polymer having an epoxidized main chain and an end hydroxyl group is partially grafted with a maleic anhydride-added styrene-ethylene-butylene-styrene copolymer, and is used for a pressure-sensitive adhesive formulation. In the technique, however, the epoxidized diene polymer has a very low molecular weight range, and the host polymer to be applied to the graft reaction has the modified main chain, whereby the reaction is not reaction that involves a functional group of a coupling agent, and the host polymer has more than one functional group per molecule.

Furthermore, such a reaction has been reported by utilizing reaction between an epoxy group of a diene elastomer having an epoxidized main chain and a low molecular weight compound having an amine functional group, an amine antiaging agent is fixed thereto by grafting (see, for example, Non-patent Document 1). However, the object of the technique is that while maintaining the antiaging function of the amine antiaging agent, migration of the antiaging agent is suppressed by fixing the antiaging agent to the polymer, and thus the technique does not aim to higher dispersion of an inorganic filler in a rubber composition.

### Related Art Documents

### Patent Documents

Patent Document 1: WO 2003/046020
Patent Document 2: JP-T-2004-513987
Patent Document 3: JP-A-11-29603
Patent Document 4: JP-A-2003-113202
Patent Document 5: JP-B-6-29338
Patent Document 6: JP-T-2003-534426
Patent Document 7: JP-A-2002-201310
Patent Document 8: JP-T-2003--517048

Non-patent Document

Non-patent Document 1: Polymer Degradation and Stability, Vol. 44, Issue 1, pp. 79-83 (1994)

Summary of the Invention

Problems to be solved by the Invention

The present invention has been made under the circumstances, and an object thereof is to provide a polymer composition that provides a rubber composition capable of, upon using as a tire material, enhancing fuel consumption efficiency of a tire and imparting sufficient wear resistance and rupture resistance to a tire, a rubber composition that has the aforementioned properties, containing the polymer composition, and a tire containing the rubber composition.

Means for solving the Problems

As a result of earnest investigations made by the inventors for achieving the object, the following knowledge has been obtained.
It has been found that the target polymer composition is obtained by mixing an elastomer that has a reactive functional group on a main chain, preferably an epoxidized diene elastomer, an inorganic filler, and a coupling agent that has one or less on average per molecule of a modification functional group having binding reactivity with the reactive functional group on the main chain of the elastomer, and has affinity with the inorganic filler or has a functional group capable of being bonded to the inorganic filler.
Furthermore, it has also found that a tire having the aforementioned properties is obtained by using a rubber composition containing the polymer composition as a tire material.
The present invention has been completed based on the knowledge.
Accordingly, the present invention provides:

(1) a polymer composition containing (A) an elastomer that has a reactive functional group on a main chain, (B) an inorganic filler, and (C) a coupling agent that has one or less on average per molecule of a modification functional group having binding reactivity with the reactive functional group on the main chain of the elastomer as the component (A), and has a functional group having affinity with the component (B) or being capable of being bonded to the component (B);
(2) the polymer composition according to the item (1), wherein the component (B) is mixed with a mixture obtained by kneading the component (A) and the component (C);
(3) the polymer composition according to the item (1) or (2), wherein the reactive functional group on the main chain of the elastomer that has the reactive functional group on the main chain as the component (A) is an epoxy group;
(4) the polymer composition according to any one of the items (1) to (3), wherein the elastomer as the component (A) is a diene elastomer;
(5) the polymer composition according to the item (4), wherein the diene elastomer is epoxidized natural rubber;
(6) the polymer composition according to the item (4), wherein the diene elastomer is epoxidized styrene-butadiene copolymer rubber or an epoxidized block copolymer;
(7) the polymer composition according to the item (6), wherein the epoxidized block copolymer is an epoxidized styrene-butadiene-styrene terpolymer;
(8) the polymer composition according to any one of the items (1) to (7), wherein the inorganic filler as the component (B) is silica and/or an inorganic compound represented by the following general formula (1):

$$M \cdot xSiO_2 \cdot yH_2O \qquad (1)$$

wherein M represents an oxide or hydroxide of at least one metal selected from Al, Mg, Ti and Ca; and x and y each represent an integer of from 0 to 10, provided that when both x and y are 0, the inorganic compound is an oxide or hydroxide of at least one metal selected from Al, Mg, Ti and Ca;
(9) the polymer composition according to any one of the items (1) to (8), wherein the coupling agent as the component (C) is a compound having a structure represented by the general formula (2):

$$L^1 - R^a - L^2 \qquad (2)$$

wherein $L^1$ represents the functional group having binding reactivity with the reactive functional group on the main chain of the component (A); $R^a$ represents a divalent hydrocarbon group having from 2 to 25 carbon atoms, which may contain a hetero atom in a chain thereof; and $L^2$ represents $-Si(R^b)_p(ORC)_q$, $-Si(R^b)_r(OH)_s$ or the functional group having affinity with the inorganic filler, wherein $R^b$ and $R^c$ each independently represent a monovalent hydrocarbon group having from 1 to 18 carbon atoms; p and r each represent an integer of from 0 to 2; and q and s each represent an integer of from 1 to 3, provided that p + q = 3 and r + s = 3;

(10) the polymer composition according to the item (9), wherein the compound having a structure represented by the general formula (2) is a compound having a structure represented by the following general formula (3):

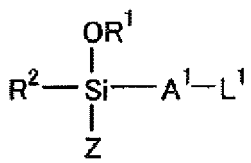 · · · (3)

wherein $R^1$ represents a monovalent hydrocarbon group having from 1 to 18 carbon atoms; $R^2$ represents a monovalent hydrocarbon group having from 1 to 18 carbon atoms or $-OR^d$, wherein $R^d$ represents a monovalent hydrocarbon group having from 1 to 18 carbon atoms; $A^1$ represents a divalent hydrocarbon group having from 2 to 10 carbon atoms, which may contain a hetero atom in a chain thereof; $L^1$ represents the functional group having binding reactivity with the reactive functional group on the main chain of the component (A) ; and Z represents $R^3O-$ or $-A^2-L^3$, wherein $R^3$ represents a monovalent hydrocarbon group having from 1 to 18 carbon atoms; $A^2$ represents a divalent hydrocarbon group having from 2 to 10 carbon atoms, which may contain a hetero atom in a chain thereof; and $L^3$ represents the functional group having affinity with the inorganic filler;

(11) the polymer composition according to the item (9) or (10), wherein the reactive functional group on the main chain of the component (A) is an epoxy group, and $L^1$ in the general formula (2) or the general formula (3) is a functional group having an active hydrogen-containing group or an acid anhydride group;

(12) the polymer composition according to the item (11), wherein the active hydrogen-containing group is a group selected from a carboxyl group, a primary amino group, a secondary amino group, a hydroxyl group, an acid amide group, an N-monosubstituted acid amide group, and these groups protected with a hydrolyzable protective group;

(13) the polymer composition according to any one of the items (9) to (12), wherein the functional group having affinity with the inorganic filler in the general formula (2) or as $L^3$ in the general formula (3) is a group selected from an isocyanate group, a silanol group, a primary amino group-containing group, a secondary amino group-containing group, an acyclic tertiary amino group-containing group, and a cyclic tertiary amino group-containing group;

(14) a rubber composition containing the polymer composition according to any one of the items (1) to (13);

(15) the rubber composition according to the item (14), wherein a content of silica and/or an inorganic compound represented by the general formula (1) as the component (B) is from 10 to 120 parts by mass per 100 parts by mass of a total rubber component; and

(16) a tire containing the rubber composition according to the item (14) or (15) as a tire material.

Advantages of the Invention

According to the present invention, there are provided a polymer composition that provides a rubber composition capable of enhancing fuel consumption efficiency of a tire and imparting sufficient wear resistance and rupture resistance to a tire, a rubber composition that has the aforementioned properties, containing the polymer composition, and a tire containing the rubber composition.

Embodiments for carrying out the Invention

The polymer composition of the present invention will be described.

Polymer Composition

The polymer composition of the present invention contains (A) an elastomer that has a reactive functional group on a main chain, (B) an inorganic filler, and (C) a coupling agent that has one or less on average per molecule of a modification functional group having binding reactivity with the reactive functional group on the main chain of the elastomer as the component (A), and has a functional group having affinity with the component (B) or being capable of being

bonded to the component (B).

(A) Elastomer having Reactive Functional Group on Main Chain

In the polymer composition of the present invention, the elastomer used as the component (A) has a reactive functional group on a main chain thereof. The elastomer before introducing the reactive functional group to the main chain is not particularly limited and is preferably a diene elastomer, and specific examples thereof include natural rubber and synthetic diene rubber, such as polyisoprene rubber (IR), styrene-butadiene copolymer rubber (SBR), polybutadiene rubber (BR), ethylene-propylene-diene rubber (EPDM), chloroprene rubber (CR), halogenated butyl rubber and acrylonitrile-butadiene rubber (NBR), and also include a diene block terpolymer, such as a styrene-butadiene-styrene terpolymer (SBS) and a styrene-isoprene-styrene terpolymer (SIS).
Among these, natural rubber, styrene-butadiene copolymer rubber (SBR), polybutadiene rubber (BR) and a styrene-butadiene-styrene terpolymer (SBS) are preferred, and in the case where the polymer composition is used for preparing the rubber composition of the present invention, natural rubber, polybutadiene rubber (BR) and styrene-butadiene copolymer rubber (SBR) are preferred, and natural rubber is particularly preferred.
SBR used may be produced by solution polymerization or emulsion polymerization. Commercially available examples of SBR produced by solution polymerization include "JSR SL563" and "JSR SL552", produced by JSR Corporation, and those of SBR produced by emulsion polymerization include "JSR 1500", produced by JSR Corporation.
Commercially available examples of SBS include "Tufprene" and "Asaprene T", produced by Asahi Kasei Chemicals Corporation.
The reactive functional group to be introduced to the main chain of the elastomer is not particularly limited, and is preferably an epoxy group from the standpoint of the easiness of introduction, reactivity and the like. In the polymer composition of the present invention, accordingly, preferred examples of the component (A) include epoxidized natural rubber (epoxidized NR), epoxidized polybutadiene rubber (epoxidized BR), epoxidized styrene-butadiene copolymer rubber (epoxidized SBR) and an epoxidized styrene-butadiene-styrene terpolymer (epoxidized SBS). These may be used solely or as a combination of two or more kinds thereof. In the case where the polymer composition is used for preparing the rubber composition of the present invention, epoxidized NR, epoxidized BR and epoxidized SBR are preferred, and epoxidized NR is particularly preferred, from the standpoint of the capability.
The epoxy group content in the epoxidized diene elastomer is preferably from 1 to 70% by mol, more preferably from 5 to 65% by mol, and further preferably from 10 to 60% by mol, from the standpoint that the objects of the present invention are effectively achieved.

Epoxidization of Diene Elastomer

For the epoxidization of the diene elastomer, a known method may be employed, in which by using a compound having an ethylenic double bond in the molecule thereof, the ethylenic double bond is epoxidized to form 1,2-epoxide. The structure of the double bond moiety of the epoxidized diene elastomer is shown in the following formula (4).
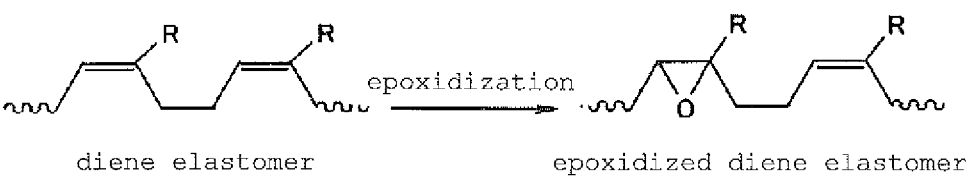

···(4)

wherein R represents a hydrogen atom or a hydrocarbon group, and preferably a hydrogen atom or a methyl group.
The method of epoxidizing the diene elastomer is not particularly limited, and examples of the method include a chlorohydrin method, a direct oxidation method, a hydrogen peroxide method, an alkylhydroperoxide method and a peracid method. Specifically, the method may be performed by using an organic peracid in an inert organic solvent, such as benzene, chloroform and carbon tetrachloride. Examples of the organic peracid used include perbenzoic acid, peracetic acid, performic acid, perphthalic acid, perpropionic acid and trifluoroperacetic acid, and among these, peracetic acid is preferred from the standpoint of the availability and the industrial view point.
In the case of epoxidized NR, for example, natural rubber latex is reacted with peracetic acid or a mixture of formic acid and $H_2O_2$ under suitable conditions, thereby providing epoxidized NR with good reproducibility containing no unstable epoxy ring-opened reaction product. Specific examples of the commercially available product of epoxidized NR include ENR-25 (epoxy group content: 25% by mol), ENR-50 (epoxy group content: 50% by mol) and ENR-60 (epoxy group

content: 60% by mol), produced by Malaysian Rubber Board (MRB). The term "epoxy group content: 50% by mol" herein means that 50% of the double bonds of natural rubber as the component (A) are epoxidized.

(B) Inorganic Filler

In the polymer composition of the present invention, the kind of the inorganic filler used as the component (B) is not particularly limited, and various inorganic fillers that have been used in the field of plastics, the field of rubber and the like may be used. In the case where the polymer composition is used for preparing a rubber composition, the inorganic filler used as the component (B) is preferably silica and/or an inorganic compound represented by the following general formula (3), and particularly preferably silica.

The silica used herein is not particularly limited and may be used after selecting from those that have been ordinarily used as a reinforcing inorganic filler for rubber.

Examples of the silica include wet silica (hydrated silicate), dry silica (anhydrous silicate), calcium silicate and aluminum silicate, and wet silica is preferred among these since it exerts both improvement of rupture resistance and wet grip property.

A preferred inorganic filler other than silica includes an inorganic compound represented by the following general formula (1):

$$M \cdot xSiO_2 \cdot yH_2O \qquad (1)$$

wherein M represents an oxide or hydroxide of at least one metal selected from Al, Mg, Ti and Ca; and x and y each represent an integer of from 0 to 10, provided that when both x and y are 0, the inorganic compound is an oxide or hydroxide of at least one metal selected from Al, Mg, Ti and Ca.

Specific examples of the inorganic compound represented by the general formula (1) include alumina ($Al_2O_3$), magnesium hydroxide ($Mg(OH)_2$), magnesium oxide ($MgO_2$), titanium white ($TiO_2$), titanium black ($TiO_{2n-1}$), talc ($3MgO \cdot 4SiO_2 \cdot H_2O$), attapulgite ($5MgO \cdot 8SiO_2 \cdot 9H_2O$), magnesium calcium silicate ($CaMgSiO_4$) and magnesium silicate ($MgSiO_3$).

The general formula (1) is preferably an inorganic compound represented by the following general formula (5) or aluminum hydroxide:

$$Al_2O_3 \cdot mSiO_2 \cdot nH_2O \qquad (5)$$

wherein m represents an integer of from 1 to 4; and n represents an integer of from 0 to 4.

Specific examples of the inorganic compound represented by the general formula (5) include clay ($Al_2O_3 \cdot 2SiO_2$), kaolin ($Al_2O_3 \cdot 2SiO_2 \cdot 2H_2O$), pyrophyllite ($Al_2O_3 \cdot 4SiO_2 \cdot H_2O$) and bentonite ($Al_2O_3 \cdot 4SiO_2 \cdot 2H_2O$). Aluminum hydroxide used in the present invention encompasses alumina hydrate.

Preferred examples of the inorganic compound represented by the general formula (1) used in the present invention include clay ($Al_2O_3 \cdot 2SiO_2$), aluminum hydroxide ($Al(OH)_3$) and alumina ($Al_2O_3$), and among these, aluminum hydroxide ($Al(OH)_3$) is particularly preferred.

The inorganic compound represented by the general formula (1) preferably has an average particle diameter of 100 μ m or less, and more preferably from 1 to 90 μm. The use of the inorganic compound represented by the general formula (1) that has a larger average particle diameter as compared to silica provides a rubber composition that is particularly excellent in wet performance (wet road surface performance) and ice performance (frozen road surface performance).

In the polymer composition of the present invention, the inorganic filler used as the component (B) may be used solely or as a mixture of two or more kinds thereof.

Filler other than Inorganic Filler (B)

The rubber composition of the present invention may contain, in addition to the inorganic filler as the component (B), other fillers than the inorganic filler. Preferred examples of the other organic fillers than the inorganic filler include carbon black.

The carbon black is not particularly limited, and for example, SRF, GPF, FEF, HAF, ISAF, SAF and the like may be used. Carbon black that has an iodine adsorption amount (IA) of 60 mg/g or more and a dibutyl phthalate oil absorption amount (DBP) of 80 mL per 100 g or more is preferred. The use of carbon black enhances the improvement of grip performance and rupture resistance, and HAF, N339, IISAF, ISAF, SAF and the like are particularly preferred owing to the excellent wear resistance thereof.

The inorganic filler used as the component (B) is preferably used in an amount of from 10 to 120 parts by mass,

more preferably from 20 to 120 parts by mass, and further preferably from 20 to 100 parts by mass, per 100 parts by mass of the total polymer components, from the standpoint of the reinforcing property and the enhancement of various properties thereby. The use of the inorganic filler used as the component (B) in an amount within the aforementioned range provides a rubber composition that is excellent in workability in factories, such as kneading workability, thereby providing the target rupture resistance.

(C) Coupling Agent

In the polymer composition of the present invention, the coupling agent used as the component (C) has one or less on average per molecule of a modification functional group having binding reactivity with the reactive functional group on the main chain of the elastomer as the component (A), and has a functional group having affinity with the component (B) or being capable of being bonded to the component (B).
In the coupling agent, the number of the modification functional groups is necessarily one or less on average per molecule. This is because the elastomer as the component (A) generally has plural reactive functional groups on the main chain thereof, and if the component (C) has plural modification functional groups, crosslinking reaction proceeds to cause gelation.
In the case where the reactive functional group on the main chain of the elastomer as the component (A) is an epoxy group, the modification functional group in the coupling agent as the component (C) is preferably a functional group having an active hydrogen-containing group or an acid anhydride group since the functional group is necessarily reacted with the epoxy group.
Preferred examples of the active hydrogen-containing group include a carboxyl group, a primary amino group, a secondary amino group (including a cyclic imino group), a hydroxyl group, an acid amide group, an N-monosubstituted acid amide group, and these groups protected with a hydrolyzable protective group.
The protected active hydrogen-containing group may be one that is converted to the active hydrogen-containing group, for example, by performing hydrolysis reaction after subjecting the active end group of the conjugated diene polymer to modification reaction. Examples of the protective group for a primary amino group or a secondary amino group include a trimethylsilyl group.
Preferred examples of the functional group having an acid anhydride group include a succinic anhydride residual group.
Examples of the functional group having affinity with the inorganic filler as the component (B) or being capable of being bonded thereto in the component (C) include, in the case where the inorganic filler is silica, a silicon atom-containing group having a hydrocarbyloxy group or a silanol group that is bonded directly to Si, an isocyanate group-containing group, a primary amino group-containing group, a secondary amino group-containing group, an acyclic tertiary amino group-containing group and a cyclic tertiary amino group-containing group.
Examples of the coupling agent as the component (C) having the structure include a compound having a structure represented by the following general formula (2):

$$L^1 - R^a - L^2 \qquad (2)$$

wherein $L^1$ represents the functional group having binding reactivity with the reactive functional group on the main chain of the component (A); $R^a$ represents a divalent hydrocarbon group having from 2 to 25 carbon atoms, which may contain a hetero atom in a chain thereof; and $L^2$ represents $-Si(R^b)_p(ORC)_q$, $-Si(R^b)_r(OH)_s$ or the functional group having affinity with the inorganic filler, wherein $R^b$ and $R^c$ each independently represent a monovalent hydrocarbon group having from 1 to 18 carbon atoms; p and r each represent an integer of from 0 to 2; and q and s each represent an integer of from 1 to 3, provided that p + q = 3 and r + s = 3.
The hetero atom herein means an atom other than a carbon atom, and is preferably an atom selected from a silicon atom, a nitrogen atom, an oxygen atom and a sulfur atom. The term "in a chain thereof" means that the hetero atom is contained not only on a main chain but also on a side chain.
The compound having the structure represented by the general formula (2) used as the coupling agent as the component (C) in the present invention is preferably a compound having a structure represented by the following general formula (3):

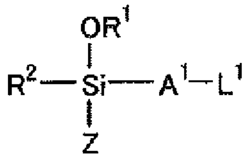

・・・(3)

wherein $R^1$ represents a monovalent hydrocarbon group having from 1 to 18 carbon atoms; $R^2$ represents a monovalent hydrocarbon group having from 1 to 18 carbon atoms or $-OR^d$, wherein $R^d$ represents a monovalent hydrocarbon group having from 1 to 18 carbon atoms; $A^1$ represents a divalent hydrocarbon group having from 2 to 10 carbon atoms, which may contain a hetero atom in a chain thereof; $L^1$ represents the functional group having binding reactivity with the reactive functional group on the main chain of the component (A) ; and Z represents $R^3O$- or $-A^2-L^3$, wherein $R^3$ represents a monovalent hydrocarbon group having from 1 to 18 carbon atoms; $A^2$ represents a divalent hydrocarbon group having from 2 to 10 carbon atoms, which may contain a hetero atom in a chain thereof; and $L^3$ represents the functional group having affinity with the inorganic filler.

In the general formula (3), examples of the monovalent hydrocarbon group having from 1 to 18 carbon atoms represented by $R^1$, $R^2$ and $R^d$ include an alkyl group having from 1 to 18 carbon atoms, an alkenyl group having from 2 to 18 carbon atoms, an aryl group having from 6 to 18 carbon atoms and an aralkyl group having from 7 to 18 carbon atoms. Among these, an alkyl group having from 1 to 18 carbon atoms is preferred, and an alkyl group having from 1 to 10 carbon atoms is more preferred, from the standpoint of the reactivity and the capability of the coupling agent. The alkyl group may be linear, branched or cyclic, and examples thereof include a methyl group, an ethyl group, a n-propyl group, an isopropyl group, a n-butyl group, an isobutyl group, a sec-butyl group, a tert-butyl group, various kinds of pentyl groups, various kinds of hexyl groups, various kinds of octyl groups, various kinds of decyl groups, a cyclopentyl group and a cyclohexyl group. Among these, an alkyl group having from 1 to 6 carbon atoms is preferred, and a methyl group and an ethyl group are particularly preferred, from the standpoint of the reactivity and the capability of the coupling agent.

The divalent hydrocarbon group having from 2 to 10 carbon atoms, which may contain a hetero atom in a chain thereof, represented by $A^1$ and $A^2$ is preferably an alkanediyl group having from 2 to 10 carbon atoms, and more preferably an alkanediyl group having from 2 to 6 carbon atoms.

The alkanediyl group having from 2 to 6 carbon atoms may be linear or branched, and examples thereof include an ethylene group, a 1,3-propanediyl group, a 1,2-propanediyl group, various kinds of butanediyl groups, various kinds of pentanediyl groups and various kinds of hexanediyl groups. Among these, linear groups, such as an ethylene group, a 1,3-propanediyl group, a 1,4-butanediyl group, a 1,5-pentanediyl group and a 1,6-hexanediyl group, are exemplified, and in particular, a 1,3-propanediyl group is preferred.

The alkanediyl groups may contain, in a chain thereof, a hetero atom, such as an ether bond (-O-), a sulfide bond (-S-) and an ester bond (-COO-).

$L^1$ represents the functional group having binding reactivity with the reactive functional group on the main chain of the component (A), and in the case where the reactive functional group on the main chain is an epoxy group, preferred examples of $L^1$ include a functional group having an active hydrogen-containing group or an acid anhydride group.

Preferred examples of the active hydrogen-containing group and the acid anhydride group include those exemplified above.

Z represents $R^3O$- or $-A^2-L^3$, and in the case where only the inorganic filler is mixed, with no carbon black mixed, Z preferably represents $R^3O$- from the standpoint of the affinity and the chemical bonding property of the coupling agent to the inorganic filler, such as silica. $R^3$ has been described above.

In the case where carbon black is mixed in addition to the inorganic filler, i.e., in the case of a mixed system of silica and carbon black, Z preferably represents $-A^2-L^3$. $L^3$ represents the functional group having affinity with the inorganic filler, and examples of the group having affinity include an isocyanate group, a silanol group, a primary amino group-containing group, a secondary amino group-containing group, an acyclic tertiary amino group-containing group and a cyclic tertiary amino group-containing group. Among these functional groups, an isocyanate group, a primary amino group-containing group, a secondary amino group-containing group, an acyclic tertiary amino group-containing group and a cyclic tertiary amino group-containing group are preferred in a mixed system of silica and carbon black since these groups also exhibit affinity to carbon black. The primary amino group and the secondary amino group in the primary amino group-containing group and the secondary amino group-containing group may be a group protected with a hydrolyzable protective group (for example, a trimethylsilyl group described above).

$A^2$ has been described above.

In the general formula (3), in the case where Z represents $R^3O$-, the general formula (3) is represented by the following general formula (3-a):

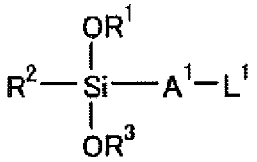

··· (3-a)

wherein $R^1$ to $R^3$, $A^1$ and $L^1$ are the same as above.

Examples of the coupling agent represented by the general formula (3-a) in the case where $L^1$ represents a functional group having an active hydrogen-containing group include a primary amino group-containing or secondary amino group-containing silane compound, such as 3-aminopropyltrimethoxysilane, 3-aminopropyltriethoxysilane, 2-aminoethyltrimethoxysilane, 2-aminoethyltriethoxysilane, 3-(N-methylamino)propyltrimethoxysilane, 3-(N-methylamino)propyltriethoxysilane, 2-(N-methylamino)ethyltrimethoxysilane, 2-(N-methylamino)ethyltriethaxysilane, 3-(N-ethylamino)propyltrimethoxysilane, 3-(N-ethylamino)propyltriethoxysilane, 2-(N-ethylamino)ethyltrimethoxysilane and 2-(N-ethylamino)ethyltriethoxysilane; a carboxyl group-containing silane compound, such as 3-(trimethoxysilyl)propoxyacetic acid, 3-(triethoxysilyl)propoxyacetic acid, 2-(trimethoxysilyl)ethoxyacetic acid, 2-(triethoxysilyl)ethoxyacetic acid, 3-(3-(trimethoxysilyl)propoxy)propionic acid, 3-(3-(triethoxysilyl)propoxy)propionic acid, 3-(2-(trimethoxysilyl)ethoxy)propionic acid and 3-(2-(triethoxysilyl)ethoxy)propionic acid; a hydroxyl group-containing silane compound, such as 3-(hydroxyethoxy)propyltrimethoxysilane, 3-(hydroxyethoxy)propyltriethoxysilane, 2-(hydroxyethyl)ethoxytrimethoxysilane and 2-(hydroxyethyl)ethoxytriethoxysilane; and an acid amide group-containing silane compound, such as 3-(trimethoxysilyl)propoxyacetic acid amide, 3-(triethoxysilyl)propoxyacetic acid amide, 2-(triznethoxysilyl)ethoxyacetic acid amide, 2-(triethoxysilyl)ethoxyacetic acid amide, 3-(3-(trimethoxysilyl)propoxy)propionic acid amide, 3-(3-(triethoxysilyl)propoxy)propionic acid amide, 3-(2-(trimethoxysilyl)ethoxy)propionic acid amide and 3-(2-(triethoxysilyl)ethoxy)propionic acid amide.

In the case where $L^1$ represents a functional group having an acid anhydride group in the general formula (3-a), examples of the coupling agent include 3-(trimethoxysilyl)propylsuccinic anhydride, 3-(triethoxysilyl)propylsuccinic anhydride, 2-(trimethoxysilyl)ethylsuccinic anhydride and 2-(triethoxysilyl)ethylsuccinic anhydride.

In the general formula (3), in the case where Z represents $-A^2-L^3$, the general formula (3) is represented by the following general formula (3-b):

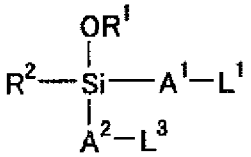

··· (3-b)

wherein $R^1$, $R^2$, $A^1$, $A^2$, $L^1$ and $L^3$ are the same as above.

Examples of the group represented by $-A^2-L^3$ in the general formula (3-b) include an isocyanate group-containing group, such as a 3-isocyanatopropyl group and a 2-isocyanatoethyl group; an acyclic tertiary amino group-containing group, such as an N-(1,3-dimethylbutylidene)-1-propaneamin-3-yl group, an N-(1-methylethylidene)-1-propaneamin-3-yl group, an N-ethylidene-1-propaneamin-3-yl group, an N-(1-methylpropylidene)-1-propaneamin-3-yl group, an N-(N,N-dimethylaminobenzylidene)-1-propaneamin-3-yl group, an N-(cyclohexylidene)-1-propaneamin-3-yl group, a 3-dimethylaminopropyl group and a 2-dimethylaminoethyl group; and a cyclic tertiary amino group-containing group, such as a 3-(4,5-dihydroimidazol-1-yl)propyl group, a 10-(4-oxazolin-3-yl)decyl group, a 3-(hexamethyleneimino)propyl group, a hexamethyleneiminomethyl group, a 2-(hexamethyleneimino)ethyl group, a 3-(1-pyrrolidinyl)propyl group, a 3-(heptamethyleneimino)propyl group, a 3-(1-dodecamethyleneimino)propyl group, a Z-(pyridin-2-yl)ethyl group, a 2-(pyridin-4-yl)ethyl group, a 3-(pyridin-2-yl)propyl group and a 3-(pyridin-4-yl)propyl group.

Examples of the coupling agent represented by the general formula (3-b) include compounds obtained by replacing one of the methoxy group or the ethoxy group in the trimethoxy moiety or the triethoxy moiety of the trimethoxysilane compounds, the trimethoxysilane compounds, the triethoxysilane compounds, the trimethoxysilyl group-containing compounds and the triethoxysilyl group-containing compounds exemplified for the coupling agent represented by the general formula (3-a), by one of the groups exemplified for the group represented by $-A^2-L^3$.

Preparation of Polymer Composition

In the polymer composition of the present invention, the coupling agent as the component (C) may be used solely or as a combination of two or more kinds thereof.

Upon preparing the polymer composition, it is preferred that the elastomer as the component (A) and the coupling agent as the component (C) are mixed, and then the inorganic filler as the component (B) is added thereto.

As the mixing method of the component (A) and the component (C), the component (A) and the component (C) may be mixed through reaction in a solution or reaction in a latex, or in alternative, the component (A) and the component (C) may be mixed through dry kneading. The dry kneading is particularly preferred owing to the easiness of mixing, i.e., the inorganic filler as the component (B) may be mixed in the same process step after mixing the component (A) and the component (C). The inorganic filler as the component (B) may be mixed after mixing the component (A) and the component (C) since the inorganic filler as the component (B) is prevented from being reacted with the component (A).

In this case, the proportion of the component (C) with respect to the reactive functional group of the component (A) generally depends on the target bonding ratio of the component (C) to the component (A), and is preferably such a proportion that the molar ratio of (reactive functional group of component (A)) / (component (C)) is from 0.05/1 to 50/1, more preferably 0.1/1 to 25/1, and further preferably from 0.2/1 to 20/1.

The bonding ratio of the component (C) to the component (A) is preferably 2% by mol or more, more preferably 4% by mol or more, and further preferably from 10 to 100% by mol.

In the coupling agent as the component (C), there is a possibility that the modification functional groups undergo self-condensation and a risk of volatilization of the component (C), and therefore, the dry kneading is preferably performed under such conditions that the self-condensation and the volatilization are prevented, and the ring-opening reaction with the epoxy group of the component (A) is facilitated. The temperature upon kneading is preferably from room temperature to 180°C, more preferably from 30 to 170°C, and further preferably from 50 to 160°C.

In the case where the elastomer having a reactive functional group on the main chain as the component (A) has an epoxy group as the reactive functional group on the main chain, and the modification functional group having binding reactivity of the component (C) is a primary amino group-containing modification functional group, the bonding structure of the component (A) and the component (C) is, for example, one represented by the following formula (6). In the formula (6), $R^1$, $R^2$, $A^1$ and Z are the same as above, and $R^4$ represents a hydrogen atom or a monovalent hydrocarbon group having from 1 to 10 carbon atoms, which may contain a hetero atom in a chain thereof.

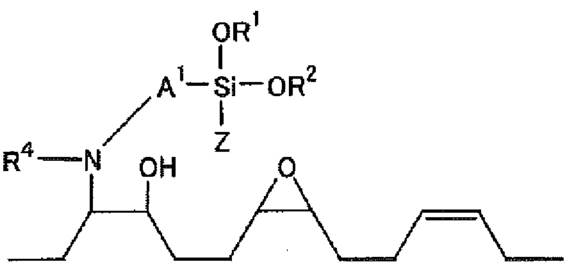

···(6)

In the kneading process, if the reaction product of the component (A) and the component (C) is reacted completely with the inorganic filler as the component (B), there is a possibility that the inorganic filler functions as a crosslinking point, which may disable flow processing. Accordingly, at least a part of the components preferably undergo the reaction upon vulcanization performed later.

In view of enhancement of the workability, for example, bis(3-triethoxysilylpropyl) sulfide or the like may be used in combination with the coupling agent as the component (C).

A vulcanized rubber composition having the inorganic filler highly dispersed therein is thus obtained, thereby providing a tire that is excellent in low loss property and has enhanced rupture resistance and wear resistance.

Rubber Composition

The rubber composition of the present invention contains the polymer composition of the present invention described above.

The rubber composition of the present invention may contain a rubber component other than the component (A) depending on necessity for enhancing the processability and the like. The rubber composition preferably contains silica and/or the inorganic compound represented by the general formula (1) as the inorganic filler, and the content thereof is preferably

from 10 to 120 parts by mass, and more preferably from 20 to 120 parts by mass, per 100 parts by mass of the total rubber component.

Rubber Component other than Component (A)

In the rubber composition of the present invention, the rubber component other than the component (A) used may be at least one selected from, for example, non-modified rubber, such as natural rubber, synthetic isoprene rubber, butadiene rubber, styrene-butadiene rubber, ethylene- α -olefin copolymer rubber, ethylene-α-olefin-diene copolymer rubber, chloroprene rubber, halogenated butyl rubber and a copolymer of styrene and isobutylene having a halogenated methyl group.
The proportion of the component (A) in the total rubber component is preferably 30% by mass or more, and more preferably 50% by mass or more, and further preferably 70% by mass or more, from the standpoint of exhibiting the advantages of the present invention sufficiently.

Silane Coupling Agent

In the case where silica is used as the reinforcing inorganic filler in the rubber composition of the present invention may contain, the rubber composition may contain a silane coupling agent for the purpose of further enhancing the reinforcing property and the low heat buildup property thereof.
Examples of the silane coupling agent include bis(3-triethoxysilylpropyl) tetrasulfide described above, and also include bis(3-triethoxysilylpropyl) trisulfide, bis(3-triethoxysilylpropyl) disulfide, bis(2-triethoxysilylethyl) tetrasulfide, bis(3-trimethoxysilylpropyl) tetrasulfide, bis(2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzothiazolyl tetrasulfide, 3-triethoxysilylpropyl methacrylate monosulfide, 3-trimethoxysilylpropyl methacrylate monosulfide, bis(3-diethoxymethylsilylpropyl) tetrasulfide, 3-mercaptopropyldimethoxymethylsilane, dimethoxymethylsilylpropyl-N,N-dimethylthiocarbamoyl tetrasulfide and dimethoxymethylsilylpropylbenzothiazolyl tetrasulfide, and among these, bis(3-triethoxysilylpropyl) polysulfide and 3-trimethoxysilylpropylbenzothiazolyl tetrasulfide are preferred from the standpoint of enhancement of the reinforcing property and the like.
The silane coupling agent may be used solely or as a combination of two or more kinds thereof.
The amount of the silane coupling agent mixed in the rubber composition of the present invention varies depending on the kind of the silane coupling agent or the like, and is preferably selected from a range of from 1 to 20% by mass for silica. When the amount is less than 1% by mass, the coupling agent is difficult to sufficiently exhibit the effect thereof, and when the amount exceeds 20% by mass, it may cause gelation of the rubber component. The amount of the silane coupling agent mixed is preferably in a range of from 5 to 15% by mass from the standpoint of the effect of the coupling agent, the prevention of gelation, and the like.

Preparation and Purpose of Rubber Composition

Upon preparing the rubber composition of the present invention, as similar to the preparation of the polymer composition described above, it is preferred that the elastomer as the component (A) and the coupling agent as the component (C) are mixed, and then the inorganic filler as the component (B) is added thereto, and the components are particularly preferably mixed by dry kneading owing to the same factors as described above.
The rubber composition of the present invention may be prepared in such a manner that the component (A) and the component (C) are mixed by such a measure as kneading, then the reinforcing inorganic filler as the component (B) is added thereto, and various kinds of chemicals that are ordinarily used in the rubber industry, such as a vulcanizing agent, a vulcanizing accelerator, an antiaging agent, an antiscorching agent, zinc flower and stearic acid, may be added in such a range that the advantages of the present invention are not impaired.
Examples of the vulcanizing agent include sulfur, and the using amount thereof is preferably 0.1 to 10.0 parts by mass, and more preferably from 1.0 to 5.0 parts by mass, in terms of sulfur content per 100 parts by mass of the total rubber component. When the amount is less than 0.1 part by mass, the vulcanized rubber may be lowered in rupture strength, wear resistance and low heat buildup property, and when the amount exceeds 10.0 parts by mass, it may cause loss of rubber elasticity.
The vulcanizing accelerator that can be used in the present invention is not particularly limited, and examples thereof include a thiazole vulcanizing accelerator, such as M (2-mercaptobenzothiazole), DM (dibenzothiazyl disulfide) and CZ (N-cyclohexyl-2-benzothiazyl sulfenamide), and a guanidine vulcanizing accelerator, such as DPG (diphenylguanidine). The using amount thereof is preferably from 0.1 to 5.0 parts by mass, and more preferably from 0.2 to 3.0

parts by mass, per 100 parts by mass of the rubber component.

The rubber composition of the present invention may be obtained by kneading the components in the order described above with a kneading machine, for example, an open kneader, such as a roll kneader, and a closed kneader, such as a Banbury mixer, and the composition may be vulcanized after molding, and then applied to various rubber products. The composition may be applied to tire purposes, such as a tire tread, an under tread, a carcass, a side wall and a bead, and may also be applied to other industrial products, such as antivibration rubber, a fender beam, a belt and a hosepipe, and the composition may be applied particularly preferably to tread rubber for a tire with high fuel consumption efficiency, a large-sized tire and a high-performance tire.

The tire of the present invention will be described. Tire

The tire of the present invention contains the rubber composition of the present invention as a tire material.

Preferred examples of the tire material include a tread, a base tread and a side wall, and the rubber composition of the present invention may be applied to any one of these materials, and may be applied particularly preferably to a tread.

The tire using the rubber composition of the present invention in the tread has small rolling resistance, is excellent in fuel consumption efficiency, and also is excellent in rupture resistance characteristics and wear resistance. Examples of gas for inflating the tire of the present invention include the ordinary air, the air having been changed for oxygen partial pressure, and an inert gas, such as nitrogen. In the case where the rubber composition of the present invention is used in a tread, the tire may be obtained in such a manner, for example, that the rubber composition is extruded into a tread member, which is adhered and molded in the ordinary manner on a tire molding machine to form a green tire, and the green tire is heated and pressurized in a vulcanizing machine, thereby providing the tire.

## Examples

The present invention will be described in more detail with reference to examples below, but the present invention is not limited to the examples.

The characteristics were measured in the following manners.

### Rubber Composition after Vulcanization

#### (1) Loss Tangent (tanδ)

The tanδ was measured at a temperature of 50°C, a frequency of 52 Hz and a dynamic strain of 1.0% with a viscoelasticity measuring machine produced by Rheometrix, and was expressed as an index value based on the tanδ of Comparative Example 1 as 100 according to the following expression. A lower index value of tanδ means excellent low heat buildup property.

$$((\tan\delta \text{ of test specimen}) / (\tan\delta \text{ of rubber composition of Comparative Example 1})) \times 100$$

#### (2) Wear Resistance

The wear amount at a slip ratio of 25% at room temperature was measured according to JIS K6264-2 (2005) with a Lambourn abrasion tester, was expressed as an index value based on the reciprocal of the wear amount of Comparative Example 1 as 100 according to the following expression. A larger index value means excellent wear resistance.

$$((\text{wear amount of rubber composition of Comparative Example 1}) / (\text{wear amount of test specimen})) \times 100$$

### Examples 1 and 2 and Comparative Example 1

Rubber compositions were prepared by using natural rubber or epoxidized natural rubber as matrix rubber

according to the formulations shown in Table 1. Specifically, the epoxidized natural rubber and the coupling agent 1 or the coupling agent 2 were kneaded at a temperature of 145°C, then the components other than the crosslinking agent were added, the mixture was kneaded at a temperature of from 150 to 151°C, and further the crosslinking agent was added, followed by kneading at 100°C or less, thereby preparing the rubber composition.
The rubber compositions were each vulcanized at 160°C for 15 minutes to provide vulcanized rubber, which was measured for wear resistance and loss tangent (tanδ). The results are shown in Table 2.

Table 1

| | | Formulation |
|---|---|---|
| Components (part by mass) | natural rubber | 20 |
| | epoxidized natural rubber 1) | 80 |
| | coupling agent 1 2) or coupling agent 2 3) | prescribed amount |
| | silica 4) | 70 |
| | aromatic oil 5) | 10 |
| | stearic acid | 2 |
| | antiaging agent C 6) | 1 |
| | silane coupling agent 7) | prescribed amount |
| | zinc flower | 2.5 |
| | vulcanizing accelerator DM 8) | 1 |
| | vulcanizing accelerator DG 9) | 1 |
| | vulcanizing accelerator NS 10) | 1 |
| | sulfur | 1.5 |

Note:
1) epoxidized natural rubber: ENR-50, a trade name (epoxy group content: 50% by mol), produced by Malaysian Rubber Board (MRB)
2) coupling agent 1: 3-(triethoxysilyl)propylsuccinic anhydride
3) coupling agent 2: 3-aminopropyltriethoxysilane
4) "Nipsil AQ", a trade name (registered trademark), produced by Tosoh Silica Corporation
5) aromatic oil: Aromax #3, a trade name, produced by Fuji Kosan Co., Ltd.
6) N-(1,3-dimethylbutyl)-N'-phenyl-p-phenylenediamine
7) "Si69", a trade name (registered trademark), produced by Degussa Ag, bis(3-triethoxysilylpropyl) tetrasulfide
8) di-2-benzothiazolyl disulfide
9) diphenylguanidine
10) N-t-butyl-2-benzothiazolyl sulfenamide

Table 2

| | | | Example | | Comparative Example |
|---|---|---|---|---|---|
| | | | 1 | 2 | 1 |
| Components (part by mass) | rubber component | natural rubber | 20 | 20 | 20 |
| | | epoxidized natural rubber | 80 | 80 | 80 |
| | coupling agent 1 | | 4 | - | - |
| | coupling agent 2 | | - | 4 | - |
| | silane coupling agent | | 4 | 4 | 8 |
| Evaluation results | wear resistance (index value) | | 118 | 115 | 100 |
| | tanδ (index value) | | 85 | 84 | 100 |

As apparent from Table 2, it was understood that the polymer compositions of the present invention were excellent in wear resistance and low heat buildup property. By applying the polymer composition of the present invention to a tire material, the tire can have enhanced fuel consumption efficiency, and also can have sufficient wear resistance and rupture resistance.

Industrial Applicability

The polymer composition of the present invention can provide a rubber composition capable of, upon using as a tire material, enhancing fuel consumption efficiency of a tire and imparting sufficient wear resistance and rupture resistance to a tire.

## Claims

1. A polymer composition comprising (A) an elastomer that has a reactive functional group on a main chain, (B) an inorganic filler, and (C) a coupling agent that has one or less on average per molecule of a modification functional group having binding reactivity with the reactive functional group on the main chain of the elastomer as the component (A), and has a functional group having affinity with the component (B) or being capable of being bonded to the component (B).

2. The polymer composition according to claim 1, wherein the component (B) is mixed with a mixture obtained by kneading the component (A) and the component (C).

3. The polymer composition according to claim 1 or 2, wherein the reactive functional group on the main chain of the elastomer that has the reactive functional group on the main chain as the component (A) is an epoxy group.

4. The polymer composition according to any one of claims 1 to 3, wherein the elastomer as the component (A) is a diene elastomer.

5. The polymer composition according to claim 4, wherein the diene elastomer is epoxidized natural rubber.

6. The polymer composition according to claim 4, wherein the diene elastomer is epoxidized styrene-butadiene copolymer rubber or an epoxidized block copolymer.

7. The polymer composition according to claim 6, wherein the epoxidized block copolymer is an epoxidized styrene-butadiene-styrene block copolymer.

8. The polymer composition according to any one of claims 1 to 7, wherein the inorganic filler as the component (B) is silica and/or an inorganic compound represented by the following general formula (1):

$M \cdot xSiO_2 \cdot yH_2O$ (1)

wherein M represents an oxide or hydroxide of at least one metal selected from Al, Mg, Ti and Ca; and x and y each represent an integer of from 0 to 10, provided that when both x and y are 0, the inorganic compound is an oxide or hydroxide of at least one metal selected from Al, Mg, Ti and Ca.

**9.** The polymer composition according to any one of claims 1 to 8, wherein the coupling agent as the component (C) is a compound having a structure represented by the general formula (2):

$L^1 - R^a - L^2$ (2)

wherein $L^1$ represents the functional group having binding reactivity with the reactive functional group on the main chain of the component (A); $R^a$ represents a divalent hydrocarbon group having from 2 to 25 carbon atoms, which may contain a hetero atom in a chain thereof; and $L^2$ represents -Si $(R^b)_p(OR^c)_q$, -Si $(R^b)_r(OH)_s$ or the functional group having affinity with the inorganic filler, wherein $R^b$ and $R^c$ each independently represent a monovalent hydrocarbon group having from 1 to 18 carbon atoms; p and r each represent an integer of from 0 to 2; and q and s each represent an integer of from 1 to 3, provided that p + q = 3 and r + s = 3.

**10.** The polymer composition according to claim 9, wherein the compound having a structure represented by the general formula (2) is a compound having a structure represented by the following general formula (3):

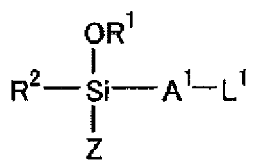

···(3)

wherein $R^1$ represents a monovalent hydrocarbon group having from 1 to 18 carbon atoms; $R^2$ represents a monovalent hydrocarbon group having from 1 to 18 carbon atoms or $-OR^d$, wherein $R^d$ represents a monovalent hydrocarbon group having from 1 to 18 carbon atoms; $A^1$ represents a divalent hydrocarbon group having from 2 to 10 carbon atoms, which may contain a hetero atom in a chain thereof; $L^1$ represents the functional group having binding reactivity with the reactive functional group on the main chain of the component (A); and Z represents $R^3O$- or $-A^2-L^3$, wherein $R^3$ represents a monovalent hydrocarbon group having from 1 to 18 carbon atoms; $A^2$ represents a divalent hydrocarbon group having from 2 to 10 carbon atoms, which may contain a hetero atom in a chain thereof; and $L^3$ represents the functional group having affinity with the inorganic filler.

**11.** The polymer composition according to claim 9 or 10, wherein the reactive functional group on the main chain of the component (A) is an epoxy group, and $L^1$ in the general formula (2) or the general formula (3) is a functional group having an active hydrogen-containing group or an acid anhydride group.

**12.** The polymer composition according to claim 11, wherein the active hydrogen-containing group is a group selected from a carboxyl group, a primary amino group, a secondary amino group, a hydroxyl group, an acid amide group, an N-monosubstituted acid amide group, and these groups protected with a hydrolyzable protective group.

**13.** The polymer composition according to any one of claims 9 to 12, wherein the functional group having affinity with the inorganic filler in the general formula (2) or as $L^3$ in the general formula (3) is a group selected from an isocyanate group, a silanol group, a primary amino group-containing group, a secondary amino group-containing group, an acyclic tertiary amino group-containing group, and a cyclic tertiary amino group-containing group.

**14.** A rubber composition comprising the polymer composition according to any one of claims 1 to 13.

**15.** The rubber composition according to claim 14, wherein a content of silica and/or an inorganic compound represented by the general formula (1) as the component (B) is from 10 to 120 parts by mass per 100 parts by mass of a total rubber component.

**16.** A tire comprising the rubber composition according to claim 14 or 15 as a tire material.

**INTERNATIONAL SEARCH REPORT**

International application No.
PCT/JP2010/060677

A. CLASSIFICATION OF SUBJECT MATTER
*C08L15/00*(2006.01)i, *B60C1/00*(2006.01)i, *C08K3/36*(2006.01)i, *C08K5/541*(2006.01)i

According to International Patent Classification (IPC) or to both national classification and IPC

B. FIELDS SEARCHED

Minimum documentation searched (classification system followed by classification symbols)
C08L15/00-15/02, B60C1/00, C08K3/36, C08K5/541

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2009-1718 A (Sumitomo Rubber Industries, Ltd.), 08 January 2009 (08.01.2009), claims; paragraphs [0011], [0014], [0020] to [0026], [0039]; examples (Family: none) | 1-16 |
| A | WO 2007/119675 A1 (Bridgestone Corp.), 25 October 2007 (25.10.2007), claims; paragraphs [0015], [0048]; examples & US 2009/0292054 A1 & EP 2003137 A2 & CN 101410405 A | 1-16 |

☒ Further documents are listed in the continuation of Box C.

☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04 August, 2010 (04.08.10) | 24 August, 2010 (24.08.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

INTERNATIONAL SEARCH REPORT

International application No.
PCT/JP2010/060677

C (Continuation). DOCUMENTS CONSIDERED TO BE RELEVANT

| Category* | Citation of document, with indication, where appropriate, of the relevant passages | Relevant to claim No. |
|---|---|---|
| A | JP 2007-177034 A (The Yokohama Rubber Co., Ltd.), 12 July 2007 (12.07.2007), claims; paragraph [0055]; examples (Family: none) | 1-16 |
| A | JP 2008-115327 A (Sumitomo Rubber Industries, Ltd.), 22 May 2008 (22.05.2008), claims; paragraphs [0034], [0035]; examples (Family: none) | 1-16 |
| A | JP 2009-13223 A (Sumitomo Rubber Industries, Ltd.), 22 January 2009 (22.01.2009), claims; paragraphs [0024], [0025]; examples & US 2009/0005481 A1 & EP 2009048 A2 & KR 10-2008-0114614 A | 1-16 |
| A | WO 2009/051073 A1 (Sumitomo Rubber Industries, Ltd.), 23 April 2009 (23.04.2009), claims; paragraphs [0080], [0081]; examples & JP 2009-113794 A | 1-16 |
| A | JP 2008-308554 A (Sumitomo Rubber Industries, Ltd.), 25 December 2008 (25.12.2008), claims; paragraphs [0048], [0050]; examples (Family: none) | 1-16 |
| A | JP 2008-285548 A (Sumitomo Rubber Industries, Ltd.), 27 November 2008 (27.11.2008), claims; paragraphs [0032], [0033]; examples & US 2010/0132867 A & EP 2138536 A1 & WO 2008/142906 A1 & CN 101679684 A | 1-16 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2003046020 A
- JP 2004513987 T
- JP 11029603 A
- JP 2003113202 A
- JP 6029338 B
- JP 2003534426 T
- JP 2002201310 A
- JP 2003 T
- JP 517048 T

### Non-patent literature cited in the description

- *Polymer Degradation and Stability,* 1994, vol. 44 (1), 79-83